(19) Europäisches Patentamt
European Patent Office
Office européen des brevets

(11) Veröffentlichungsnummer: **0 143 749**
**A1**

# (12) EUROPÄISCHE PATENTANMELDUNG

(21) Anmeldenummer: **84810566.4**

(22) Anmeldetag: **20.11.84**

(51) Int. Cl.⁴: **C 01 G 15/00**, C 22 B 58/00, C 22 B 3/00

(30) Priorität: **29.11.83 CH 6369/83**

(43) Veröffentlichungstag der Anmeldung: **05.06.85 Patentblatt 85/23**

(84) Benannte Vertragsstaaten: **DE FR GB IT**

(71) Anmelder: **GEBRÜDER SULZER AKTIENGESELLSCHAFT, Zürcherstrasse 9, CH-8401 Winterthur (CH)**

(72) Erfinder: **Wynn, Nicholas Patrick, 35 Wyland Avenue, Toronto Ontario (CA)**
Erfinder: **Zabelka, Michal, Dr., Birsfelderstrasse 51, CH-4232 Muttenz (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

## (54) Verfahren zur Flüssig-Flüssig-Extraktion von Gallium aus basischen, wässerigen Lösungen mit Hilfe eines organischen Extraktionsmittels.

(57) Verfahren zur Flüssig-Flüssig-Extraktion von Gallium aus basischen, wässerigen Lösungen, insbesondere aus der Natriumaluminat-Lauge der Tonerde-Produktion nach dem Bayer-Prozess, mit Hilfe eines organischen Extraktionsmittels. Das aus einem Solvent und einem substituierten 8-Hydroxychinolin bestehende organische Extraktionsmittelgemisch enthält zusätzlich eine organische Phosphorverbindung.

Durch die Zumischung dieser Phosphorverbindung wird dem Extraktionsmittelgemisch eine hohe Extraktionsgeschwindigkeit von Gallium aus der Aluminatlauge verliehen. Sie ist höher als diejenige von bisher bekannten Extraktionsmitteln.

EP 0 143 749 A1

P.5849/SdBs

Gebrüder Sulzer Aktiengesellschaft, Winterthur (Schweiz)

# Verfahren zur Flüssig-Flüssig-Extraktion von Gallium aus basischen, wässrigen Lösungen mit Hilfe eines organischen Extraktionsmittels

Die Erfindung betrifft ein Verfahren zur Flüssig-Flüssig-Extraktion von Gallium aus basischen, wässrigen Lösungen, insbesondere aus der Natriumaluminatlauge der Tonerde-Produktion nach dem Bayer-Prozess, mit Hilfe eines organischen Extraktionsmittels, das aus einem Solvent und einem substituierten 8-Hydroxychinolin zusammengesetzt ist.

Nach dem bekannten Bayer-Verfahren, das zur Herstellung von Aluminiumoxid aus Aluminiummineralien (Bauxiten) dient, werden letztere bei erhöhter Temperatur und erhöhtem Druck mit Natronlauge aufgeschlossen.

Aus der Natriumaluminatlauge lässt sich Aluminiumhydroxid ausfällen, das anschliessend zu $Al_2O_3$ (Tonerde) gebrannt wird.

Der grösste Teil der Galliumproduktion erfolgt heute aus Bauxiten, welche bis ca. 0,01 % Gallium enthalten, in Verbindung mit dem Bayer-Prozess. Gallium wird nach dem Erzaufschluss aus der Aluminatlauge meistens elektrolytisch gewonnen.

Durch die Rezirkulation der Lauge wird das Gallium/Aluminium-Verhältnis von ca. 1:4000 in Bauxit auf ca. 1:300 in der Aluminatlauge erhöht.

Durch verschiedene zusätzliche Anreicherungsmethoden wird der Galliumgehalt in der Lauge weiter angehoben, wobei jedoch die Aluminatlauge in ihrer Zusammensetzung verändert wird und nicht mehr in den Bayer-Prozess zurückgeschickt werden kann.

Es wurden zwei Verfahren entwickelt, welche die Aluminatlauge nicht verändern.

Das erste Verfahren zeichnet sich dadurch aus, dass das Gallium direkt an einer Quecksilber-Kathode aus der Lauge abgeschieden wird.

Bei einem zweiten Verfahren gewinnt man das Gallium durch die Zementation mit einem Natriumamalgam (s. Ullmanns Enzyklopädie der technischen Chemie).

Aber auch diese beiden Verfahren sind kostspielig und aufwendig, da grosse Mengen von Quecksilber behandelt werden müssen im Verhältnis zu der kleinen Menge an gewonnenem Gallium.

Es sind auch organische Substanzen bekannt, die Gallium aus basischen Lösungen zu extrahieren vermögen, die beispielsweise beim Bayer-Prozess behandelt werden. Die ersten bekanntgewordenen organischen Extraktionsmittel waren Hydroxychinolin und Acetylaceton, wie sie beispielsweise in der FR-PS 952 976 bzw. in der US-PS 3 887 681 erwähnt werden. Ihrer industriellen Anwendung stehen allerdings ihre hohe Löslichkeit in der basischen Lauge und ihre kleine Selektivität entgegen.

Die Entwicklung und Einführung der kupferspezifischen Extraktionsmittel auf Hydroxychinolin-Basis hat erst zu umfangreichen Untersuchungen der industriellen Anwendung

dieser substituierten 8-Hydroxychinoline für die Extraktion von Gallium aus den Laugen des Bayer-Prozesses geführt, wie es z.B. in der FR-PS 74 242 63 erwähnt wird.

Ein wesentlicher Nachteil dieser Extraktionsmittel war, dass die Extraktionsgeschwindigkeit von Gallium auch bei erhöhter Temperatur verhältnismässig niedrig war. Weitere Temperaturerhöhung, um die Geschwindigkeit der Extraktion zu erhöhen, ist jedoch wegen der zunehmenden Zersetzung des Extraktionsmittels nicht möglich.

Es wurde aber gefunden, wie z.B. in der FR-PS 77 377 85 erwähnt ist, dass die Zumischung einer organischen Verbindung mit mindestens einer Carbonsäuregruppe zu substituiertem 8-Hydroxychinolin die Extraktionsgeschwindigkeit von Gallium beträchtlich erhöht. Die Zugabe von einer Carbonsäure bringt allerdings zwei Nachteile mit sich.

Erstens sind die Verluste des Extraktionsmittels durch seine erhöhte Löslichkeit in der Aluminatlauge verhältnismässig hoch, und zweitens ist die Carbonsäure kinetisch erst wirksam bei grossen Konzentrationen derselben im Extraktionsmittelgemisch. Das heisst, erst dann kann eine hinreichend grosse Extraktionsgeschwindigkeit erreicht werden.

Der Erfindung liegt demgegenüber die Aufgabe zugrunde, ein organisches Extraktionsmittelgemisch aufzufinden, welches ausser einer relativ geringen Löslichkeit in der basischen Lösung hohe Extraktionsgeschwindigkeiten ermöglicht.

Diese Aufgabe wird mit Hilfe der im Kennzeichen des Anspruchs 1 genannten Merkmale erreicht.

Beispielsweise kann das erfindungsgemässe Extraktionsmittelgemisch ausser dem Solvent (Lösungsmittel) und dem vorstehend erwähnten substituierten 8-Hydroxychinolin eine substituierte Phosphinverbindung enthalten.

Als Lösungsmittel kann jedes beliebige organische, höhersiedende Solvent, wie z.B. Kerosin, verwendet werden.

Es wurde jedoch festgestellt, dass ein Lösungsmittel, das vorwiegend aromatische Kohlenwasserstoffe enthält, allgemein bessere Eigenschaften dem Gemisch verleiht. So verläuft z.B. die Trennung der zwei Phasen (organisches Extraktionsmittel und Aluminatlauge) nach dem Stoffaustausch besser und schneller, als wenn ein aliphatisches Lösungsmittel verwendet werden würde.

Nach dem Galliumaustausch zwischen dem organischen Extraktionsmittelgemisch und der Aluminatlauge des Bayer-Prozesses ist die organische Phase teilweise auch mit Aluminium und Natrium beladen. Dieses wird durch die sehr hohen Konzentrationen dieser zwei Metalle in der Aluminatlauge verursacht. Das Aluminium/Gallium-Verhältnis im Extraktionsmittel und auch das Natrium/Gallium-Verhältnis sind viel niedriger als in der wässrigen, basischen Lauge.

So ist bei einer typischen Extraktion das Aluminium/Gallium-Verhältnis in der Lauge beispielsweise 400:1 und in der mit dieser Lauge im chemischen Gleichgewicht stehenden organischen Phase beispielsweise nur 2.5:1. Aehnlich verhält sich die Selektivität bezüglich Natrium: Natrium/Gallium-Verhältnis in der Lauge 940:1 und im Extraktionsmittel 15:1. In absoluten Konzentrationen ausgedrückt: Die Aluminatlauge enthält 150 g/l Natrium, 64 g/l Aluminium und 0,16 g/l Gallium und das Extraktionsmittel 6 g/l Natrium, 1 g/l Aluminium und 0,4 g/l Gallium.

Die drei Metalle können, wie das aus der Praxis der Metallextraktion bekannt ist, aus der organischen Phase mit einer Mineralsäure, wie z.B. Schwefelsäure, wieder entfernt werden. Hier kann eine noch bessere Abtrennung von Gallium von den anderen zwei Metallen (Aluminium und Natrium) erreicht werden, da die relative Stabilität der drei Metallkomplexe im Extraktionsmittelgemisch verschieden hoch ist. So ist der Galliumkomplex im Vergleich zu den Aluminium- und Natriumkomplexen stabiler, und es braucht eine hochkonzentrierte Mineralsäure, um diesen Galliumkomplex zu zerstören und das Gallium damit wiederzugewinnen. Die Metalle Aluminium und Natrium können vor der Galliumabstreifung mit einer verdünnten Säure aus dem Extraktionsmittel ausgewaschen werden, wobei das Gallium im Extraktionsmittel verbleibt. Somit kann eine weitere Galliumreinigung erreicht werden.

Zahlenbeispiel

Ein organisches Extraktionsmittel, zusammengesetzt aus 10 Vol % KELEX (Warenzeichen der Fa. Schering GmbH), 15 Vol % Isodecanol, 30 g/l Cyanex CNX (Warenzeichen der Cyanamid Company) in Solvesso 150 (Warenzeichen der ESSO Chem. Comp.), beladen mit 0.4 g/l Gallium, 1 g/l Aluminium, 6 g/l Natrium, wurde mit einer Schwefelsäurelösung, welche 100 g/l $H_2SO_4$ im Wasser enthielt, in zwei Gegenstromstufen in Kontakt gebracht. Die Phasen nach der Abtrennung haben folgende Konzentrationen aufgewiesen:

1. Phase

| | |
|---|---|
| Organisches Extraktionsmittelgemisch: | 0.39 g/l Gallium, 0.02 g/l Aluminium und 5 ppm Natrium; |

2. Phase

| | |
|---|---|
| Wässrige, saure Lösung: | 0,04 g/l Gallium, 3.9 g/l Aluminium und 24 g/l Natrium. |

Anschliessend wurde das Extraktionsmittelgemisch nochmals in zwei Gegenstromstufen mit einer Schwefelsäurelösung, welche aber diesmal 300 g/l $H_2SO_4$ im Wasser enthalten hatte, in Kontakt gebracht. Nach der Abtrennung lauteten die Konzentrationen:

| | |
|---|---|
| Organisches Extraktionsmittelgemisch: | 0.01 g/l Gallium, Aluminium und Natrium nicht messbar; |
| Wässrige Schwefelsäure: | 7.5 g/l Gallium, 0.4 g/l Aluminium und 0.07 g/l Natrium. |

Die erste wässrige Phase (verdünnte Schwefelsäure), welche den grössten Teil von Aluminium und Natrium enthält, kann restlos in den Bayer-Prozess zurückgeführt werden, wo sie ohne zusätzlichen Aufwand weiter behandelt werden kann.

Die allfälligen Verluste von Aluminium und Natrium sind vergleichsmässig unbedeutend und vernachlässigbar klein. Aus der zweiten wässrigen Phase (konzentrierte Schwefelsäure), welche den grössten Teil des extrahierten Galliums enthält, kann z.B. mit einer Lauge ein Galliumhydroxid ausgefällt werden, das zur Weiterverarbeitung zu reinem Gallium verwendet werden kann.

So ist durch das oben beschriebene Zahlenbeispiel mit Hilfe der Erfindung ein Galliumgewinnungsverfahren verwirklicht, welches ohne jede Veränderung des Bayer-Prozesses an jede Bayer-Tonerde-Anlage angeschlossen werden kann. Dieses Verfahren behandelt einen verhältnismässig geringen Teil der Aluminatlauge und, von etwas vermindertem Metallgehalt (Aluminium und Natrium) abgesehen, gibt es diese Lauge unverändert in den Prozess zur Tonerdegewinnung wieder zurück. Die Verluste von Aluminium und Natrium sind verschwindend klein, und auch der Verbrauch von Betriebsstoffen für die Gallium-Anlage ist im Vergleich zum Produktwert (Gallium) klein.

Das folgende Diagramm zeigt einen Vergleich der Galliumextraktionsgeschwindigkeiten von zwei Extraktionsmittelgemischen.

Extraktionsmittelgemisch I gemäss der Erfindung:

10 Vol % KELEX, 30 g/l Cyanex CNX,
15 Vol % Isodecanol in Solvesso 150.

Extraktionsmittelgemisch II mit Carbonsäure:

10 Vol % KELEX, 5 Vol % Versatic 10 (Warenzeichen der Shell Comp.), 15 Vol % Isodecanol in Solvesso 150.

Beide Gemische wurden auf die gleiche Art und Weise bei 50° C mit einer industriellen Aluminatlauge bei einem Phasenverhältnis W/O = 8/1 kontaktiert. Die Lauge enthält 150 g/l Natrium, 64 g/l Aluminium und 0.16 g/l Gallium. Alle Metallanalysen wurden mit einem Atomabsorptionsspektrofotometer durchgeführt.

Das Diagramm zeigt, dass das erfindungsgemässe Extraktionsmittelgemisch I Gallium wesentlich rascher als das bekannte, eingangs beschriebene Extraktionsmittelgemisch II extrahiert.

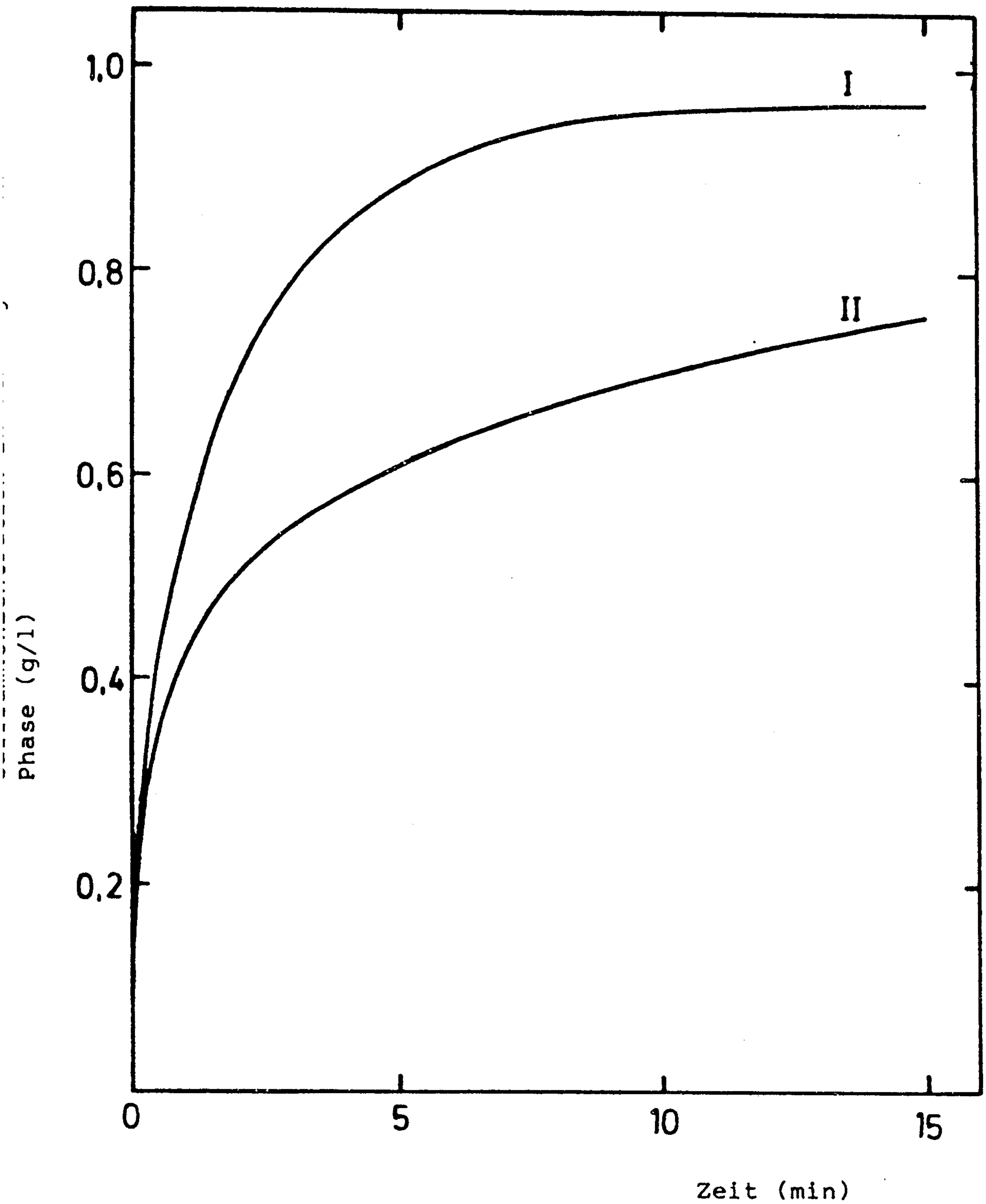
1,0
0,8
0,6
0,4
0,2
Phase (g/l)
I
II
0
5
10
15
Zeit (min)

Patentansprüche

1. Verfahren zur Flüssig-Flüssig-Extraktion von Gallium aus basischen, wässrigen Lösungen, insbesondere aus der Natriumaluminat-Lauge der Tonerde-Produktion nach dem Bayer-Prozess, mit Hilfe eines organischen Extraktionsmittels, das aus einem Solvent und einem substituierten 8-Hydroxychinolin zusammengesetzt ist, dadurch gekennzeichnet, dass das organische Extraktionsmittelgemisch zusätzlich eine organische Phosphorverbindung enthält.

2. Verfahren nach Anspruch 1, dadurch gekennzeichnet, dass die organische Phosphorverbindung ein substituiertes Phosphin ist, welches aus den folgenden Gruppen (a - j) ausgewählt ist:

a) Primäre Phosphine ($RPH_2$)

b) Sekundäre Phosphine ($R_2PH$)

c) Tertiäre Phosphine ($R_3P$)

d) Phosphinsäuren und ihre Ester ($R_2\overset{\overset{O}{\|}}{P}-OH$)

e) Phosphonsäuren und ihre Ester ($RP\begin{matrix} \nearrow O \\ -OH \\ \searrow OH \end{matrix}$)

f) Sekundäre Phosphinoxide ($R_2\overset{\overset{O}{\|}}{P}-H$)

g) Sekundäre Phosphinsulfide ($R_2\overset{\overset{S}{\|}}{P}-H$)

h) Dithiophosphinsäuren und ihre Ester ($R_2\overset{\overset{S}{\|}}{P}-SH$)

i) Tertiäre Phosphinoxide ($R_3P=O$)

j) Tertiäre Phosphinsulfide ($R_3P=S$)

3. Verfahren nach Anspruch 1, dadurch gekennzeichnet, dass der Gehalt der organischen Phosphorverbindung im Extraktionsmittelgemisch weniger als 10 Gew. % ist.

Europäisches Patentamt

# EUROPÄISCHER RECHERCHENBERICHT

0143749
Nummer der Anmeldung

EP 84 81 0566

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,P | EP-A-0 102 882 (RHONE-POULENC SPECIALITES CHIMIQUES)<br>* Insgesamt *<br>--- | 1-3 | C 01 G 15/00<br>C 22 B 58/00<br>C 22 B 3/00 |
| X | EP-A-0 000 457 (RHONE-POULENC INDUSTRIES)<br>* Patentansprüche; Seiten 4-5 *<br>--- | 1-3 | |
| A,D | FR-A- 952 976 (COMPAGNIE DE PRODUITS CHIMIQUES ET ÉLECTRO-MÉTALLURGIQUES ALAIS, FROGES ET CAMARGUE)<br>--- | | |
| A | AU-B- 448 131 (ASHLAND OIL INC.)<br>--- | | RECHERCHIERTE SACHGEBIETE (Int. Cl.4) |
| X,D | FR-A-2 277 897 (RHONE-PROGIL)<br>* Patentansprüche; Seite 4 *<br>--- | 1-3 | C 01 G<br>C 22 B |
| X | FR-A-2 306 271 (METALLURGIE HOBOKEN-OVERPELT)<br>* Patentansprüche 10,14-15,26, 28-29 *<br>---<br>-/- | 1-3 | |

Der vorliegende Recherchenbericht wurde für alle Patentansprüche erstellt.

| Recherchenort | Abschlußdatum der Recherche | Prüfer |
|---|---|---|
| DEN HAAG | 22-02-1985 | JACOBS J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

Europäisches Patentamt

# EUROPÄISCHER RECHERCHENBERICHT

0143749
Nummer der Anmeldung

EP 84 81 0566

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 039 404 (K. RICHARDS et al.)<br>* Patentanspruch 13 *<br>--- | 1-3 | |
| X | FR-A-2 365 641 (SOCIETE RHONE-POULENC IND.)<br>* Patentansprüche; Seite 2 *<br>--- | 1-3 | |
| X,D | EP-A-0 002 970 (RHONE-POULENC IND.)<br>* Patentansprüche; Seite 6 *<br>----- | 1-3 | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 22-02-1985 | JACOBS J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82